# EUROPEAN PATENT APPLICATION

(11) **EP 2 905 316 A1**
(43) Date of publication of application: **12.08.2015**
(21) Application number: 15466001.3
(22) Date of filing: 05.02.2015
(51) Int. Cl.: C09D 5/00

(54) **Decorative dispersion paint**

(30) Priority: 06.02.2014 CZ 201429196 U
(71) Applicant: Koh-I-Noor Hardtmuth a.s., 371 30 Ceské Budejovice (CZ)
(72) Inventor: Záboj, Robert, 500 02 Hradec Králové (CZ)
(74) Representative: Korejzová, Petra

(57) **Abstract**

A decorative dispersion paint, containing a gel dispersion medium and in said medium dispersed at least one dispersed phase of a different colour than has said medium. The dispersion paints may be used for various drawing and decorative techniques

## Description

### Field of the invention

The technical solution concerns a decorative dispersion paint, whose parts are variously coloured and dispersed in a gel medium. The result is a pasty substance containing differently coloured, mutually non-mixing parts.

### Background of the invention

The current offer of artistic and decorative paints is relatively wide. Depending on the basic ingredient (binder), paints can be divided into several categories. Oil paint is a slowly drying matter consisting of pigment particles suspended in drying oil, mostly linseed oil. In temperas, a pigment is bound with the emulgating system by an emulsion. Unlike oil paints, temperas are more matt, can be mixed with water and dry faster. Their properties are similar to those of gouache paints, in which a guar gum solution is used as a binder, or to acrylic paints.

Acrylic paints are one of the newest types of paints used for artistic purposes. Said paint are of a type of the dispersion paint on the basis of polyacrylic resin. Before drying, these paints can be water diluted but the film becomes water resistant when dry. In addition to acrylic dispersions, dispersions made from other polymers such as vinyl acetate, styrene, and copolymers thereof can also be used as binder.

All these paints are available only in individual shades that can be intimately mixed with each other, creating one homogenous shade. This property is used for example when creating intermediate shades. However, for certain decorative techniques this feature also represents a limitation.

In the field of painting and decoration it would be desirable to also have paints that do not create a homogenous layer after application but provide different colour effects on the background. However, this requires a certain degree of non-miscibility of the components due to the fact that even by mere creating a coarse dispersion of two different colour components of known types of paints, even in case of gel components, the components spontaneously mix with each other already during storage, i.e., before the use.

### Description of the invention

The technical solution is directed to a decorative dispersion paint which contains at least two different colour components. The present paint therefore represents a type of mutually immiscible multi-colour composition.

The paint consists of two basic parts: a colourless gel dispersion medium, and two or more different colour dispersed phases that are dispersed in said gel medium. This dispersion paint preserves the non-miscibility of said phases not only during storage but partially also during application onto the ground, which opens a range of new opportunities in the area of painting and decoration.

The production of the decorative dispersion paint consists of sequential mixing of different colour phases into a pre-prepared gel dispersion medium.

Accordingly, the decorative dispersion paint in accordance with the technical solution contains
a) a gel dispersion medium containing the following gelling agents: 2 to 25 % by weight of synthetically modified layered silicate and 0.1 to 15% by weight of organically modified smectite, wherein the balance up to 100 % by weight consists of water and optionally other usual dispersion paint additives,
   and in said medium dispersed
b) at least one dispersed phase of a different colour than has the component a), containing a dispersion of
   5 to 50 % by weight, based on dry matter, of an organic copolymer,
   0.1 to 30 % by weight, based on dry matter, of a colour pigment and
   0.01 to 10 % by weight, based on dry matter, of a non-ionic surfactant,
   wherein the balance up to 100 % by weight consists of water, and optionally other usual dispersion paint additives,
and where a ratio of components a) to b) is 1 part by weight of component a) to 0.1 to 5 parts by weight of the component or components b).

The base/binder of the colour component is formed by a copolymer-based aqueous dispersion. This dispersion is coloured to the required shades using pigments or pigment pastes, resulting in a coloured pasty substance. Mutual immiscibility of individual shades, both during mixing and during application, is supported by including into said colour component, beside other additives, a surface-active agent (a non-ionic surfactant).

The non-ionic surfactant may be selected for instance from substances commonly used in the art, preferably with a hydrophilic-lipophilic balance value of 10 to 15. One example includes an addition of 0.2% by weight of alpha-(phenylmethyl)-omega-((1,1,3,3-tetramethylbutyl)phenoxy)poly (oxy-1,2-ethanediyl) as the non-ionic surfactant.

The preferred embodiment can use vinyl acetate/acrylic acid/vinyl verstate terpolymer as the aqueous dispersion of organic copolymer. Even more preferable is a water dispersion containing 30 to 70 % by weight, specifically 50 % by weight of water.

For example, if in a preferred embodiment 20 % by weight of organic copolymer, based on dry matter, is added to component b), the meaning is that for 100 g of component b) 40 g of the organic copolymer suspension is added having a concentration of 50 % by weight.

In another preferred embodiment the used water dispersion of the copolymer has a viscosity of 500 to 1000 mPas, preferably 750 mPas.

The gel dispersion medium is formed by a suspension of a synthetically modified layered silicate in water of a concentration of 2 to 25 %, preferably 8 % by weight, based on dry matter. The synthetic layered silicate is preferably modified to create clear thixotropic gel with water.

In a preferred embodiment, the synthetically modified layered silicate is a silicate having mean particle diameter of 35 to 55 µm, specifically of 45 µm.

In order to increase the stability of the whole system, organically modified smectite having particle size of 1 to 5 µm, specifically of 3 µm, is also added to the silicate solution, said smectite modifying the rheological properties of the gel. The content of organically modified smectite in component a) is preferably 1% by weight based on dry matter.

The gel formed is thin, clouded by the added smectite.

Without being bound by any theory, it is assumed that during mixing, plates of said silicate cover the particles formed during the mixing process from coloured dispersion phases, creating a layer around them, thus preventing a contact and mutual mixing of individual colour shades.

Mean diameter of said dispersion phase particles is independently 0.5 to 5 mm, preferably 2 mm.

The decorative dispersion paint may comprise other common additives in component a) and/or b), if required, selected independently from the group of a soluble dye, a pigment, a water soluble organic solvent, glycerol, an organic or inorganic acid, sodium or potassium hydroxide, natural rubber, carboxymethyl cellulose, a pearling agent and metal particles. Such additives may be selected by an expert without unreasonable experimentation on the basis of his/her experience.

### Example

In accordance with the technical solution, the dispersion paint consists of a clear gel solution and differently pigmented dispersion colour, which is dispersed in this solution in the form of drops. After mixing, a compact multi-colour substance is formed.

Firstly, a base of the colour component is prepared, in which an aqueous polymer dispersion is used as a binder. 0.2g of non-ionic surfactant (an active substance of alpha-(phenylmethyl)-omega-((1,1,3,3-tetramethylbutyl)phenoxy)poly(oxy-1,2-ethanediyl), the hydrophilic lipophilic balance of 12,6) was thoroughly mixed into 94.8 g of aqueous dispersion of vinyl acetate/acrylic acid/vinyl versetate terpolymer containing 65 % of water and having a viscosity of 750 mPas.

0.05 - 2g of red, yellow, green, blue or a differently coloured pigment paste (dry matter content depending on the shade 40-60% by weight, glycerol 15-25% by weight, the balance is water) was added always to 20 g of said base in order to create the required shade.

Colour components prepared in this manner as dispersion phases were individually and at slow revolutions admixed into the gel solution as the dispersion medium in a ratio of 45 % by weight of the colour component to 55 % by weight of the gel solution. Said gel solution was prepared by dispersing 8 g of powder hydrophilic synthetically modified layered silicate having an average particle size of 45 µm and 1 g of powder hydrophilic organically modified smectite having an average particle size of 3 µm while thoroughly mixing in 91 g of distilled water.

Created particles of dispersion paint having a size of 1 to 2 mm in a clear gel dispersion medium were tested for stability during storage. No mixing of components has been observed during storage exceeding 6 months. When applied carefully to paper using a brush, variable colour effects were created depending on the degree and direction of smearing.

### Industrial applicability

Dispersion gel paints in accordance with the technical solution may be used for various drawing and decorative techniques on absorbent or non-absorbent papers for children in schools or artwork clubs and as a hobby product. They can be offered individually or in a set.

## Claims

1. A decorative dispersion paint **characterized in that** said paint contains
a) a gel dispersion medium containing a dispersion of
2 to 25 % by weight of a synthetically modified layered silicate, and
0.1 to 15 % by weight of organically modified smectite, wherein the balance up to 100 % by weight consists of water, and optionally other usual dispersion paint additives,
and in said medium dispersed
b) at least one dispersed phase having a different colour than has the component a), containing a dispersion of
5 to 50 % by weight, based on dry matter, of an organic copolymer,
0.1 to 30 % by weight, based on dry matter, of a colour pigment and
0.01 to 10 % by weight, based on dry matter, of a non-ionic surfactant,
wherein the balance up to 100 % by weight consists of water, and optionally other usual dispersion paint additives, and where a ratio of components a) to b) is 1 part by weight of component a) to 0.1 to 5 parts by weight of component(s) b).

2. The decorative dispersion paint according to claim 1, **characterized in that** the organic copolymer of component b) is a vinyl acetate/acrylic acid/vinyl versetate terpolymer.

3. The decorative dispersion paint according to claim 1 or 2, **characterized in that** the content of water in the aqueous dispersion of the organic copolymer of component b) is 50 to 80 % by weight, specifically 65 % by weight.

4. The decorative dispersion paint according to claim 3, **characterized in that** that the aqueous dispersion of the organic copolymer of component b) has a viscosity of 500 to 1000 mPas, specifically 750 mPas.

5. The decorative dispersion paint according to any of the preceding claims, **characterized in that** the content of the organically modified layered silicate of component a) is 8 % by weight.

6. The decorative dispersion paint according to any of the preceding claims, **characterized in that** the content of organically modified smectite of component a) is 8 % by weight.

7. The decorative dispersion paint according to any of the preceding claims, **characterized in that** the hydrophilic-lipophilic balance value of the non-ionic surfactant of component b) is 10 to 15, specifically 12.6.

8. The decorative dispersion paint according to any of the preceding claims, **characterized in that** said other usual additives of component a) or b) are independently selected from the group of a preservative, a viscosity regulator, a pH regulator, a colouring additive, a refractive index regulator, a turbidity regulator, a dispersion stabilizer, a drying speed regulator and flexibility, hardness and gloss regulators of the paint layer.

9. The decorative dispersion paint according to any of the preceding claims, **characterized in that** said other usual additives of component a) or b) are independently selected from the group of a soluble dye, a pigment, a water soluble organic solvent, glycerol, an organic or inorganic acid, sodium or potassium hydroxide, natural rubber, carboxymethyl cellulose, a pearling agent and metal particles.

10. The decorative dispersion paints according to any of the preceding claims, **characterized in that** that the dispersed phase b) particle mean
